# DEMANDE DE BREVET EUROPEEN

(11) **EP 1 293 645 A1**
(43) Date de publication de la demande: **19.03.2003**
(21) Numéro de dépôt: 01870197.9
(22) Date de dépôt: 14.09.2001
(51) Int. Cl.: F01D 25/24, F01D 9/02, F02C 7/20

(54) **Compresseur axial de turbomachine comprenant un dispositif de séparation de flux et procédé d'assemblage de ce dispositif**

(71) Demandeur: Techspace Aero S.A., 4041 Herstal (BE)
(72) Inventeur: Lhoest, André, 4500 Huy (BE); Michel, Bruno, 3070 Kortenberg (BE)
(74) Mandataire: Van Malderen, Joelle

(57) **Abrégé**

La présente invention se rapporte à un compresseur axial double flux d'une turbomachine comprenant au moins un corps haute pression constitué successivement d'un compresseur HP, d'une chambre de combustion et d'une turbine HP, ledit corps haute pression étant éventuellement entouré par un corps basse pression qui est lui-même constitué d'un compresseur BP et d'une turbine BP disposées de part et d'autre du corps HP, les compresseurs BP et/ou HP étant précédés d'une soufflante, chaque compresseur BP et/ou HP étant constitué d'une succession d'étages de compression (3) et d'étages redresseurs (4) se succédant au sein d'une virole externe et d'une virole interne, toutes deux concentriques, la virole externe du premier compresseur servant de bec de séparation entre le flux primaire et le flux secondaire, cette virole externe étant constituée de deux parties essentiellement concentriques ( interne et externe (11)) qui se rejoignent pour former le bec, caractérisé en ce que la partie externe (11) de la virole (6) servant de bec de séparation présente au moins un point d'appui auto-centrant (12) sur une bride de fixation (13) de ladite virole.

## Description

### Objet de l'invention

La présente invention se rapporte à un compresseur axial double flux comprenant une virole servant de bec de séparation entre le flux secondaire (non comprimé) et le flux primaire soumis à la compression par les compresseurs.

### Arrière plan technologique

Les compresseurs axiaux sont bien connus en soi, et sont utilisés dans plusieurs types d'application. En particulier, ils sont utilisés dans les moteurs double flux turbofans.

Ces compresseurs basse (BP) et/ou haute pression (HP) sont essentiellement constitués de plusieurs étages de compression séparés par des étages redresseurs qui ont pour but de repositionner le vecteur vitesse du fluide sortant de l'étage de compression précédent avant de l'envoyer vers l'étage de compression suivant.

Les compresseurs basse pression et/ou haute pression sont donc une succession d'étages alternativement d'aubes mobiles et d'aubes fixes disposés entre une virole interne et une virole externe, toutes deux concentriques.

Ces compresseurs sont généralement associés à un étage de propulsion se présentant sous l'aspect d'un fan constitué d'une soufflante à grandes aubes qui sépare le flux extérieur en un flux primaire qui va subir une succession de compressions dans les compresseurs basse et/ou haute pression et qui est destiné à la combustion, et un flux secondaire qui est directement éjecté en tant que vecteur de propulsion.

Les recherches actuelles sur les turbines aéronautiques conduisent à l'augmentation des distances de séparation entre les aubes du turbofan et le premier étage redresseur du compresseur basse pression. Ces distances importantes ont comme conséquence d'allonger la portée des viroles externes du compresseur basse pression servant de bec de séparation entre le flux primaire et le flux secondaire. Cette portée accrue amène à son tour de nouvelles contraintes de rigidité et de centrage du bec de séparation afin d'éviter les vibrations.

Les solutions existantes proposent soit des viroles spécifiques de centrage positionnées en dessous du bec de séparation, soit un morcellement du bec de séparation en plusieurs viroles distinctes. Ces deux solutions présentent des inconvénients au niveau de la simplicité de fabrication et d'assemblage et conduisent donc à une perte de temps considérable durant le montage.

### Buts de l'invention

La présente invention vise à fournir une solution simple aux différents problèmes connus dans l'état de la technique.

La présente invention vise donc à fournir une solution permettant de rigidifier et de raidir la virole servant de bec de séparation d'un turbocompresseur.

La présente invention vise plus particulièrement à proposer une solution qui permette de simplifier le centrage des viroles servant de becs de séparation entre le flux primaire et le flux secondaire des turbines aéronautiques.

La présente invention vise en outre à obtenir une solution qui offre une grande simplicité de montage et qui ne nécessite pas d'opérations d'assemblage supplémentaires.

Un but complémentaire de l'invention est de pouvoir conserver la même procédure de fabrication des viroles.

### Principaux éléments caractéristiques de l'invention

La présente invention se rapporte à un compresseur axial double flux d'une turbomachine comprenant au moins un corps haute pression constitué successivement d'un compresseur HP, d'une chambre de combustion et d'une turbine HP, ledit corps haute pression étant éventuellement entouré par un corps basse pression qui est lui-même constitué d'un compresseur BP et d'une turbine BP disposées de part et d'autre du corps HP, les compresseurs BP et/ou HP étant précédés d'une soufflante qui récolte le fluide extérieur pour le séparer en un flux primaire dirigé vers les corps BP et/ou HP et en un flux secondaire destiné à être éjecté; chaque compresseur BP et/ou HP étant constitué d'une succession d'étages de compression et d'étages redresseurs se succédant au sein d'une virole externe et d'une virole interne, toutes deux concentriques, la virole externe du premier compresseur servant de bec de séparation entre le flux primaire et le flux secondaire, cette virole externe étant constituée de deux parties essentiellement concentriques (interne et externe) qui se rejoignent pour former le bec, caractérisé en ce que la partie externe de la virole servant de bec de séparation présente au moins au moins un point d'appui auto-centrant sur une bride de fixation de ladite virole.

De préférence, le point d'appui auto-centrant présente une surépaisseur qui fait office de raidisseur du bec de séparation. On peut ainsi éviter les vibrations importantes dues à l'augmentation de portée des becs de séparation.

La bride est de préférence usinée au diamètre de centrage du bec et présente avantageusement un cône vers l'arrière de la turbomachine pour faciliter le positionnement du bec par l'avant sur la bride.

La présente invention se rapporte également à une virole servant de bec de séparation entre un flux primaire et un flux secondaire d'une turbomachine constituée d'une partie interne et d'une partie externe se rejoignant pour former le bec, caractérisée en ce que la partie externe présente au moins un point d'appui auto-centrant sur une bride de fixation de ladite virole.

Un autre aspect de la présente invention se rapporte à un procédé d'assemblage d'un bec de séparation du flux primaire et du flux secondaire dans une turbomachine comprenant au moins un redresseur, de préférence une turbine aéronautique, caractérisé en ce que ledit bec vient se positionner par l'avant de la turbomachine, par simple appui auto-centrant, autour d'une bride de fixation de la virole extérieure d'un étage redresseur du compresseur.

### Brève description des figures

La figure 1 représente une demi-vue générale en coupe axiale d'un moteur turbofan à double flux.

La figure 2 représente schématiquement un compresseur par exemple basse pression muni d'une virole servant de bec de séparation selon la présente invention.

### Description d'une forme d'exécution préférée de l'invention

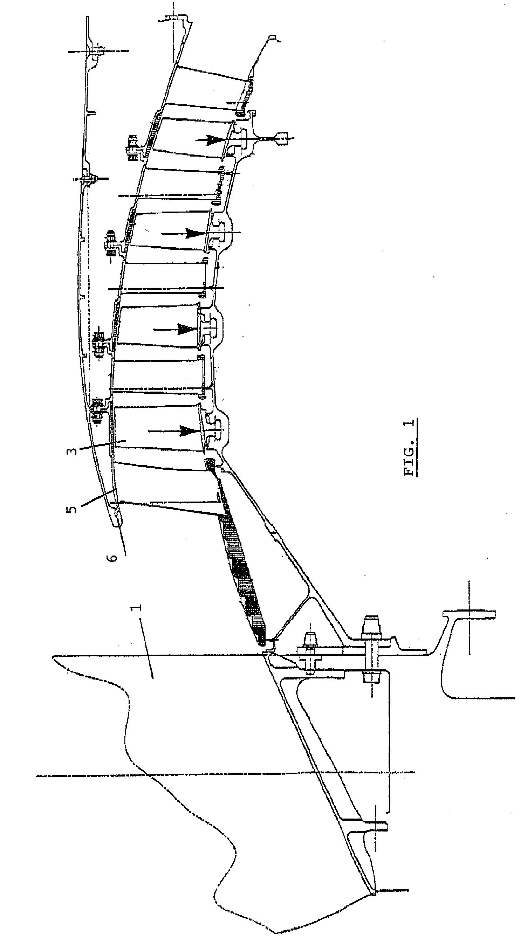

La figure 1 représente de manière particulièrement schématique un moteur turbofan à double flux.

Un moteur classique turbofan à double flux double corps comprend d'une part un corps haute pression HP (corps central) constitué d'un compresseur haute pression et d'une turbine haute pression entre lesquels est disposée la chambre de combustion. Ce corps haute pression HP est entouré par un corps basse pression (BP) 2 qui comprend un compresseur basse pression et une turbine basse pression de part et d'autre du corps HP. Le compresseur basse pression est précédé d'une soufflante 1 (turbofan) et permet de récolter le fluide extérieur pour le diriger ensuite vers les corps basse pression et haute pression.

Cette soufflante 1 permet de séparer le flux extérieur en un flux primaire, qui va subir la succession des compressions jusqu'à la combustion, et un flux secondaire, qui va être directement éjecté.

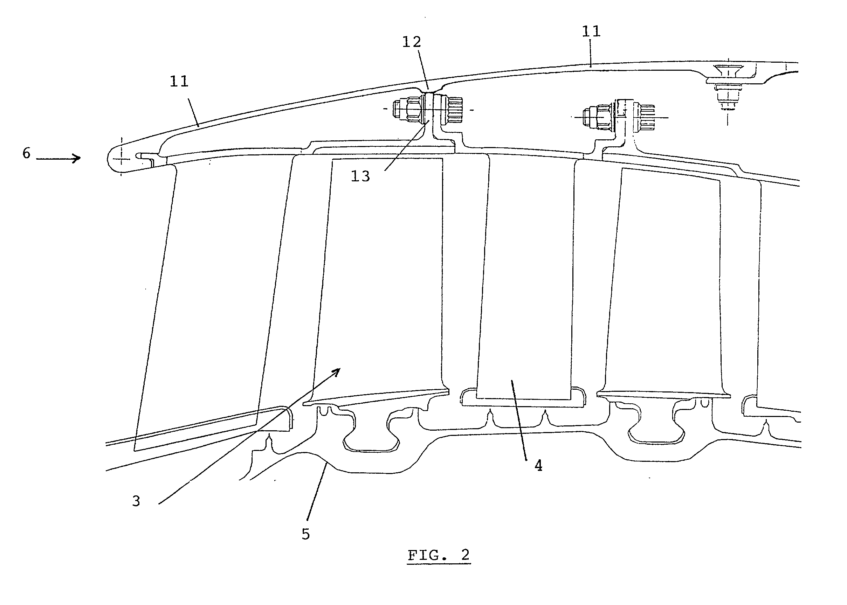

Tant le compresseur haute pression que le compresseur basse pression comprennent une succession d'étages de compression 3 séparés par des étages redresseurs 4. Les étages de compression 3 sont essentiellement constitués d'aubes mobiles fixées à un disque rotatif central tandis que les étages redresseurs sont constitués d'aubes fixes servant de lien entre la virole intérieure 5 et la virole extérieure 6 (Fig. 2).

La virole extérieure 6 du compresseur basse pression sert de "bec de séparation" qui sépare le flux primaire du flux secondaire. En réalité, cette virole 6 est elle-même constituée de deux parties essentiellement concentriques (interne 10 et externe 11) qui se rejoignent pour former le "bec".

La partie interne est elle-même constituée d'une succession de viroles individuelles assemblées entre elles à l'aide d'un élément de fixation telle une bride 13.

La solution proposée par la présente invention consiste à prévoir sur la partie externe 11 de la virole 6 un point d'appui 12 tel que représenté à la figure 2.

Fonctionnellement, la partie externe 11 de la virole 6 s'appuie légèrement sur une bride de fixation 13 de ladite virole. Plus précisément, cette bride 13 est localisée au niveau du premier étage redresseur du compresseur basse pression.

Le centrage s'effectue donc par le contact du point d'appui 12 (auto-centrant) sur la bride 13 qui fait office de diamètre de centrage.

L'appui auto-centrant 12 comprend de manière particulièrement avantageuse une surépaisseur qui permet de raidir le bec de séparation 11 et de limiter ses vibrations.

L'appui auto-centrant 12 est en outre dessiné de manière à permettre une introduction facile par l'avant de la partie externe de la virole 6 autour de la bride 13. De même, la bride 13 présente un arrondi, de préférence un cône, vers l'arrière du moteur de façon à faciliter le positionnement du bec.

Selon l'invention, l'assemblage est simplifié puisqu'il permet de disposer la partie externe 11 du bec par l'avant du redresseur et donc un positionnement et un centrage précis et facile autour de la bride 13 de fixation. Avantageusement, cet assemblage ne nécessite aucune virole supplémentaire et élimine toutes les opérations de serrage ou d'assemblage qu'une telle virole supplémentaire impliquerait. Ceci constitue donc un gain de temps appréciable au montage.

L'invention permet aussi avantageusement de ne pas modifier la procédure de fabrication du bec de séparation car ladite surépaisseur ne nécessite aucune opération supplémentaire par rapport au procédé de fabrication utilisé selon l'état de la technique.

En conséquence, les coûts d'usinage et de fabrication s'en trouvent réduits (moins de pièces, opérations de tournage uniquement).

## Revendications

1. Compresseur axial double flux d'une turbomachine comprenant au moins un corps haute pression constitué successivement d'un compresseur HP, d'une chambre de combustion et d'une turbine HP, ledit corps haute pression étant éventuellement entouré par un corps basse pression qui est lui-même constitué d'un compresseur BP et d'une turbine BP disposées de part et d'autre du corps HP, les compresseurs BP et/ou HP étant précédés d'une soufflante qui récolte le fluide extérieur pour le séparer en un flux primaire dirigé vers les corps BP et/ou HP et en un flux secondaire destiné à être éjecté; chaque compresseur BP et/ou HP étant constitué d'une succession d'étages de compression (3) et d'étages redresseurs (4) se succédant au sein d'une virole externe et d'une virole interne, toutes deux concentriques, la virole externe du premier compresseur servant de bec de séparation entre le flux primaire et le flux secondaire, cette virole externe étant constituée de deux parties essentiellement concentriques (interne (10) et externe (11)) qui se rejoignent pour former le bec, **caractérisé en ce que** la partie externe (11) de la virole (6) servant de bec de séparation présente au moins au moins un point d'appui auto-centrant (12) sur une bride de fixation (13) de ladite virole.

2. Compresseur selon la revendication 1, **caractérisé en ce que** le point d'appui auto-centrant (12) présente une surépaisseur qui fait office de raidisseur de ladite virole.

3. Compresseur selon la revendication 1 ou 2, **caractérisé en ce que** la bride (13) est usinée au diamètre de centrage dudit bec (11).

4. Compresseur selon l'une quelconque des revendications précédentes, **caractérisé en ce que** la bride (13) présente un cône vers l'arrière de ladite turbomachine pour faciliter le positionnement du bec (11) par l'avant sur ladite bride (13).

5. Bec (11) de séparation du flux primaire et du flux secondaire d'une turbomachine comprenant au moins un étage redresseur dans un compresseur, de préférence un compresseur basse pression (BP), **caractérisé en ce que** ledit bec présente au moins un point d'appui (12) auto-centrant sur une bride (13) de fixation de la virole extérieure (6) d'un étage redresseur du compresseur.

6. Procédé d'assemblage d'un bec (11) de séparation du flux primaire et du flux secondaire dans une turbomachine comprenant au moins un redresseur, de préférence une turbine aéronautique, **caractérisé en ce que** ledit bec (11) vient se positionner par l'avant de la turbomachine, par simple appui auto-centrant (12), autour d'une bride (13) de fixation de la virole extérieure (6) d'un étage redresseur du compresseur (BP).
